(19) Europäisches Patentamt
European Patent Office
Office européen des brevets

(11) **EP 3 524 805 B1**

(12) **EUROPEAN PATENT SPECIFICATION**

(45) Date of publication and mention
of the grant of the patent:
**17.02.2021 Bulletin 2021/07**

(51) Int Cl.:
*F02D 45/00* *(2006.01)*     *F02D 41/00* *(2006.01)*
*F02D 41/22* *(2006.01)*

(21) Application number: **17909652.4**

(86) International application number:
**PCT/JP2017/047139**

(22) Date of filing: **27.12.2017**

(87) International publication number:
**WO 2019/130525 (04.07.2019 Gazette 2019/27)**

(54) **ENGINE ANOMALY DETECTION DEVICE**

VORRICHTUNG ZUR ERKENNUNG VON MOTORANOMALIEN

DISPOSITIF DE DÉTECTION D'ANOMALIE DE MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.08.2019 Bulletin 2019/33**

(73) Proprietor: **Mitsubishi Heavy Industries
Engine & Turbocharger, Ltd.
Sagamihara-shi, Kanagawa 252-5293 (JP)**

(72) Inventors:
• **SASE, Ryo
Tokyo 108-8215 (JP)**
• **NOGUCHI, Shintarou
Tokyo 108-8215 (JP)**

(74) Representative: **Mader, Joachim et al
Bardehle Pagenberg Partnerschaft mbB
Patentanwälte, Rechtsanwälte
Prinzregentenplatz 7
81675 München (DE)**

(56) References cited:
**WO-A1-2017/154105     WO-A1-2018/096894
JP-A- H03 261 838     JP-A- 2000 054 906
JP-A- 2001 107 776     JP-A- 2001 107 776
JP-A- 2010 209 682     JP-A- 2012 092 677
JP-A- 2015 169 191**

## Description

### TECHNICAL FIELD

The present disclosure relates to an engine abnormality detection device.

### BACKGROUND ART

Normally, an automobile engine has a plurality of cylinders. The combustion state of each cylinder may vary due to different causes such as variation of the fuel injection amount or variation of the EGR amount caused by individual difference or aging of injectors, for instance. In particular, in case the combustion state of one of the cylinders deteriorates remarkably, misfire may occur. These abnormalities may lead to malfunction of the engine, and thus it is important to detect these abnormalities in an early stage.

Patent Documents 1 to 6 disclose methods of determining the combustion state of cylinders, such as misfire, from the engine rotation speed or the turbo rotation speed. However, these methods use a rotation speed, which includes noise, and thus cannot always determine the combustion state accurately.

In contrast, Patent Document 7 discloses using a velocity signal that indicates the rotation velocity of the crank shaft and generating an angular acceleration signal that indicates an angular acceleration of the crank shaft to perform frequency analysis of the angular acceleration signal, thereby revealing that the cylinder component of the cylinder frequency of a cylinder with misfire is smaller than the cylinder component of cylinders without misfire. Accordingly, it is possible to determine occurrence of misfire if the cylinder component is smaller than a cylinder threshold, which makes it possible to detect misfire of an engine regardless of noise. WO 2018/096 894 A1 suggests a device for diagnosing an internal combustion engine, the device diagnosing fuel combustion states in each cylinder of a multi-cylinder internal combustion engine provided with an exhaust turbine supercharger.

WO 2017/154 105 A1 relates to a turbocharger surging detection method for detecting surging in a turbocharger provided in an internal combustion engine.

Citation List

Patent Literature

Patent Document 1: JPH3-246353A

Patent Document 2: JP2976684B

Patent Document 3: JP2001-289111A

Patent Document 4: JP2014-234814A

Patent Document 5: JP2016-142181A

Patent Document 6: JP2015-197074A

Patent Document 7: JP2017-106417A

### SUMMARY

Problems to be Solved

However, in the method disclosed in Patent Document 7, only misfire is taken into account, and thus it is impossible to effectively detect an abnormality of an injector in which the fuel injection amount to a certain cylinder increases or decreases, and it is also impossible to effectively detect unevenness of the combustion state of the cylinders caused by a reason other than a change in the fuel injection amount.

In view of the above, an object of at least one embodiment of the present disclosure is to provide an engine abnormality detection device whereby it is possible to detect unevenness of the combustion state of the cylinders accurately.

### Solution to the Problems

(1) According to at least one embodiment of the present invention, an engine abnormality detection device for detecting unevenness of a combustion state of each of a plurality of cylinders of an engine includes: a rotation information acquisition part configured to obtain rotation information related to a rotation state of the engine; a frequency analysis part configured to perform frequency analysis of the rotation information, the frequency analysis part being configured to calculate a component of $f_{Ne}$ and a component $f_{cyl}$ through the frequency analysis of the rotation information, where Ne [rpm] is a rotation speed of the engine, $f_{Ne}$ [Hz] is a frequency of a single cycle of the engine, satisfying the following expression:

[Expression 1]

$$f_{Ne} = \frac{1}{2} \cdot \frac{Ne}{60}$$

, $n_{cyl}$ is the number of the cylinders, and $f_{cyl}$ [Hz] is a frequency of pulsation of the engine, satisfying the following expression:

[Expression 2]

$$f_{cyl} = \frac{1}{2} \cdot \frac{Ne}{60} \cdot n_{cyl}$$

; and a detection part configured to detect unevenness of exhaust energy of each cylinder on the basis of the component of $f_{Ne}$ and the component of $f_{cyl}$.

According to the above configuration (1), by detecting unevenness of exhaust energy of each of the cylinders on the basis of the component of $f_{Ne}$ and the component of $f_{cyl}$ calculated through frequency analysis of the rotation information, it is possible to detect not only a case where the combustion state of a cylinder deteriorates compared to the combustion state of the other cylinders, but also a case where the injection amount of a cylinder is greater than the injection amount of other cylinders or difference in the ignition timing. Thus, it is possible to detect unevenness of the combustion state of the cylinders accurately.

(2) In some embodiments, in the above configuration (1), for the detection part, a $f_{Ne}$ threshold being a threshold of the component of $f_{Ne}$, and an upper limit threshold $f_{cyl}$ being an upper limit threshold of the component $f_{cyl}$, are set in advance. The detection part is configured to detect that exhaust energy of one of the plurality of cylinders is high, if the component of $f_{Ne}$ is not smaller than the $f_{Ne}$ threshold, and the component of $f_{cyl}$ is not smaller than the $f_{cyl}$ upper limit threshold.

According to the above configuration (2), through comparison of the component of $f_{Ne}$ and the $f_{Ne}$ threshold, and the component of $f_{cyl}$ and the $f_{cyl}$ upper limit threshold, it is possible to detect that exhaust energy of one of the plurality of cylinders is high, and thus it is possible to detect unevenness of the combustion state of the cylinders accurately.

(3) In some embodiments, in the above configuration (1) or (2), for the detection part, a $f_{Ne}$ threshold being a threshold of the component of $f_{Ne}$, and a $f_{cyl}$ lower limit threshold being a lower limit threshold of the component $f_{cyl}$, are set in advance. The detection part is configured to detect that exhaust energy of one of the plurality of cylinder is low, if the component of $f_{Ne}$ is not smaller than the $f_{Ne}$ threshold, and the component of $f_{cyl}$ is not greater than the $f_{cyl}$ lower limit threshold.

According to the above configuration (3), through comparison of the component of $f_{Ne}$ and the $f_{Ne}$ threshold, and the component of $f_{cyl}$ and the $f_{cyl}$ lower limit threshold, it is possible to detect that exhaust energy of one of the plurality of cylinders is low, and thus it is possible to detect unevenness of the combustion state of the cylinders accurately.

(4) In some embodiments, in the above configuration (1), the frequency analysis part is configured to calculate a ratio R of the component of $f_{Ne}$ to the component of $f_{cyl}$ (=the component of $f_{Ne}$ / the component $f_{cyl}$) from the calculated component of $f_{Ne}$ and the calculated component of $f_{cyl}$. For the detection part, a threshold of the ratio R is set in advance. The detection part is configured to detect that exhaust energy of one of the plurality of cylinders is low if the ratio R is not smaller than the threshold.

According to the above configuration (4), by utilizing the ratio R of the component of $f_{Ne}$ and the component of $f_{cyl}$, if exhaust energy of one cylinder is low, the component of $f_{cyl}$ decreases and the component of $f_{Ne}$ increases. Thus, a change in the ratio R stands out and it is possible to detect a decrease in exhaust energy more accurately.

(5) In some embodiments, in any one of the above configurations (1) to (4), the rotation information is a rotation speed of a turbocharger for supplying compressed intake air to the cylinders.

An engine has a great inertia and thus a change of the rotation speed is less likely to appear, and it is often difficult to detect unevenness of the combustion state of the cylinders accurately. However, according to the above configuration (5), the rotation speed of the turbocharger is used as the rotation information, and thus a change in the rotation speed of the turbocharger is more likely to appear compared to the engine rotation speed. Thus, it is possible to detect unevenness of the combustion state of the cylinders accurately.

(6) In some embodiments, in the above configuration (1), the rotation information includes: an engine rotation speed which is a rotation speed of the engine; and a turbo rotation speed which is a rotation speed of a turbocharger for supplying compressed intake air to the cylinders. The frequency analysis part is configured to calculate a component of $f_{Ne\_Eng}$ corresponding to the component of $f_{Ne}$ and a component of $f_{cyl\_Eng}$ corresponding to the component of $f_{cyl}$ through frequency analysis of the engine rotation speed, and calculate a component of $f_{Ne\_Turbo}$ corresponding to the component of $f_{Ne}$ and a component of $f_{cyl\_Turbo}$ corresponding to the component of $f_{cyl}$ through frequency analysis of the turbo rotation speed. The detection part is configured to detect unevenness of a combustion state of each cylinder on the basis of the component of $f_{Ne\_Eng}$, the component of $f_{cyl\_Eng}$, the component of $f_{Ne\_Turbo}$, and the component of $f_{cyl\_Turbo}$.

According to the above configuration (6), by detecting unevenness of the combustion state of the cylinders on the basis of the component of $f_{Ne}$ (the component of $f_{Ne-Eng}$ and the component of $f_{Ne-Turbo}$) and the component of $f_{cyl}$ (the component of $f_{cyl-Eng}$ and the component of $f_{cyl-Turbo}$) calculated through frequency analysis of the engine rotation speed and the turbo rotation speed, respectively, it is possible to detect unevenness of the combustion state of the cylinders in more detail compared to a case in which frequency analysis is performed on only one of the engine rotation speed or the turbo rotation speed.

(7) In some embodiments, in the above configuration (6), for the detection part, a $f_{Ne\_Eng}$ threshold being a threshold of the component of $f_{Ne\_Eng}$, a $f_{cyl\_Eng}$ upper limit threshold being an upper limit threshold of the component of $f_{cyl\_Eng}$, a $f_{Ne\_Turbo}$ threshold being a threshold of the component of $f_{Ne\_Turbo}$, and a $f_{cyl\_Turbo}$ upper limit threshold being an upper limit threshold of the component of $f_{cyl\_Turbo}$, are set in advance. The detection part is configured to detect that a fuel injection amount to one of the plurality of cylinders is greater than a fuel injection amount to each of the other cylinders, if the component of $f_{Ne\_Eng}$ is not smaller than the $f_{Ne\_Eng}$ threshold and the component of $f_{Ne\_Turbo}$ is not smaller than the $f_{Ne\_Turbo}$ threshold, and the component of $f_{cyl\_Eng}$ is not smaller than the $f_{cyl\_Eng}$ upper limit threshold and the component of $f_{cyl\_Turbo}$ is not smaller than the $f_{cyl\_Turbo}$ upper limit threshold.

According to the above configuration (7), by comparing the component of $f_{Ne\_Eng}$ and the component of $f_{Ne\_Turbo}$ to the $f_{Ne\_Eng}$ threshold and the $f_{Ne\_Turbo}$ threshold respectively, and comparing the component of $f_{cyl\_Eng}$ and the component of $f_{cyl\_Turbo}$ to the $f_{cyl\_Eng}$ upper limit threshold and the $f_{cyl\_Turbo}$ upper limit threshold respectively, it is possible to detect that the fuel injection amount to one of the plurality of cylinders is greater than the fuel injection amount to each of the other cylinders. Thus, compared to a case in which frequency analysis is performed on only one of the engine rotation speed or the turbo rotation speed, it is possible to detect the combustion state of the cylinders in more detail.

(8) In some embodiments, in any one of the above configuration (6) or (7), for the detection part, a $f_{Ne\_Eng}$ threshold being a threshold of the component of $f_{Ne\_Eng}$, a $f_{cyl\_Eng}$ upper limit threshold being an upper limit threshold of the component of $f_{cyl\_Eng}$, a $f_{Ne\_Turbo}$ threshold being a threshold of the component of $f_{Ne\_Turbo}$, and a $f_{cyl\_Turbo}$ lower limit threshold being a lower limit threshold of the component of $f_{cyl\_Turbo}$, are set in advance. The detection part is configured to detect that a fuel efficiency of one of the cylinders is higher than a fuel efficiency of each of the other cylinders, if the component of $f_{Ne\_Eng}$ is not smaller than the $f_{Ne\_Eng}$ threshold and the component of $f_{Ne\_Turbo}$ is not smaller than the $f_{Ne\_Turbo}$ threshold, and the component of $f_{cyl\_Eng}$ is not smaller than the $f_{cyl\_Eng}$ upper limit threshold and the component of $f_{cyl\_Turbo}$ is not greater than the $f_{cyl\_Turbo}$ lower limit threshold.

According to the above configuration (8), by comparing the component of $f_{Ne\_Eng}$ and the component of $f_{Ne\_Turbo}$ to the $f_{Ne\_Eng}$ threshold and the $f_{Ne\_Turbo}$ threshold respectively, and comparing the component of $f_{cyl\_Eng}$ and the component of $f_{cyl\_Turbo}$ and the $f_{cyl\_Eng}$ upper limit threshold and the $f_{cyl\_Turbo}$ lower limit threshold respectively, it is possible to detect that the combustion efficiency of one of the plurality of cylinders is higher than the combustion efficiency of each of the other cylinders. Thus, compared to a case in which frequency analysis is performed on only one of the engine rotation speed or the turbo rotation speed, it is possible to detect the combustion state of the cylinders in more detail.

(9) In some embodiments, in any one of the above configurations (6) to (8), for the detection part, a $f_{Ne\_Eng}$ threshold being a threshold of the component of $f_{Ne\_Eng}$, a $f_{cyl\_Eng}$ lower limit threshold being a lower limit threshold of the component of $f_{cyl\_Eng}$, a $f_{Ne\_Turbo}$ threshold being a threshold of the component of $f_{Ne\_Turbo}$, and

a $f_{cyl\_Turbo}$ upper limit threshold being an upper limit threshold of the component of $f_{cyl\_Turbo}$, are set in advance. The detection part is configured to detect that a fuel efficiency of one of the cylinders is lower than a fuel efficiency of each of the other cylinders, if the component of $f_{Ne\_Eng}$ is not smaller than the $f_{Ne\_Eng}$ threshold and the component of $f_{Ne\_Turbo}$ is not smaller than the $f_{Ne\_Turbo}$ threshold, and the component of $f_{cyl\_Eng}$ is not greater than the $f_{cyl\_Eng}$ lower limit threshold and the component of $f_{cyl\_Turbo}$ is not smaller than the $f_{cyl\_Turbo}$ upper limit threshold.

According to the above configuration (9), by comparing the component of $f_{Ne\_Eng}$ and the component of $f_{Ne\_Turbo}$ and to $f_{Ne\_Eng}$ threshold and the $f_{Ne\_Turbo}$ threshold respectively and comparing the component of $f_{cyl\_Eng}$ and the component of $f_{cyl\_Turbo}$ to the $f_{cyl\_Eng}$ lower limit threshold and the $f_{cyl\_Turbo}$ upper limit threshold respectively, it is possible to detect that the combustion efficiency of one of the plurality of cylinders is lower than the combustion efficiency of each of the other cylinders. Thus, compared to a case in which frequency analysis is performed on only one of the engine rotation speed or the turbo rotation speed, it is possible to detect the combustion state of the cylinders in more detail.

(10) In some embodiments, in any one of the above configurations (6) to (9), for the detection part, a $f_{Ne\_Eng}$ threshold being a threshold of the component of $f_{Ne\_Eng}$, a $f_{cyl\_Eng}$ lower limit threshold being a lower limit threshold of the component of $f_{cyl\_Eng}$, a $f_{Ne\_Turbo}$ threshold being a threshold of the component of $f_{Ne\_Turbo}$, and a $f_{cyl\_Turbo}$ lower limit threshold being a lower limit threshold of the component of $f_{cyl\_Turbo}$ are set in advance. The detection part is configured to detect that a fuel injection amount to one of the cylinders is smaller than a fuel injection amount to each of the other cylinders, if the component of $f_{Ne\_Eng}$ is not smaller than the $f_{Ne\_Eng}$ threshold and the component of $f_{Ne\_Turbo}$ is not smaller than the $f_{Ne\_Turbo}$ threshold, and the component of $f_{cyl\_Eng}$ is not greater than the $f_{cyl\_Eng}$ lower limit threshold and the component of $f_{cyl\_Turbo}$ is not greater than the $f_{cyl\_Turbo}$ lower limit threshold.

According to the above configuration (10), by comparing the component of $f_{Ne\_Eng}$ and the component of $f_{Ne\_Turbo}$ to the $f_{Ne\_Eng}$ threshold and the $f_{Ne\_Turbo}$ threshold respectively and comparing the component of $f_{cyl\_Eng}$ and the component of $f_{cyl\_Turbo}$ to the $f_{cyl\_Eng}$ lower limit threshold and the $f_{cyl\_Turbo}$ lower limit threshold respectively, it is possible to detect that the fuel injection amount to one of the plurality of cylinders is smaller than the fuel injection amount to each of the other cylinders. Thus, compared to a case in which frequency analysis is performed on only one of the engine rotation speed or the turbo rotation speed, it is possible to detect the combustion state of the cylinders in more detail.

(11) In some embodiments, in any one of the above configurations (2) to (5) and (7) to (10), the engine abnormality detection device further includes: a combustion cylinder identifying part configured to identify a cylinder in which combustion is occurring, of the plurality of cylinders; and an abnormality cylinder identifying part configured to identify the one cylinder on the basis of a result of detection by the detection part and a result of identification by the combustion cylinder identifying part.

According to the above configuration (11), it is possible to identify a cylinder with an abnormal combustion state.

Advantageous Effects

According to at least one embodiment, by detecting unevenness of exhaust energy of the cylinders on the basis of the component of $f_{Ne}$ and the component of $f_{cyl}$ calculated through frequency analysis of the rotation information, it is possible to detect not only a case where the combustion state of a cylinder deteriorates compared to the combustion state of the other cylinders, but also a case where the injection amount of a cylinder is greater than the injection amount of other cylinders or difference in the ignition timing. Thus, it is possible to detect unevenness of the combustion state of the cylinders accurately.

**BRIEF DESCRIPTION OF DRAWINGS**

FIG. 1    is a schematic diagram of a configuration of an engine abnormality detection device according to the first embodiment of the present disclosure.

FIG. 2    is a flowchart of an operation of an engine abnormality detection device according to the first embodiment of the present disclosure.

FIG. 3    is a graph showing an example of a relationship between the fuel injection amount to each cylinder, the turbo rotation speed, and the component of $f_{Ne}$ and the component of $f_{cyl}$.

FIG. 4    is a graph showing an example of a relationship between the fuel injection amount to each cylinder, the turbo rotation speed, and the component of $f_{Ne}$ and the component of $f_{cyl}$.

FIG. 5    is a flowchart of an operation of an modified example of an engine abnormality detection device according to the first embodiment of the present disclosure.

FIG. 6    is a flowchart of an operation of another modified example of an engine abnormality detection device according to the first embodiment of the present disclosure.

FIG. 7    is a schematic diagram of a configuration of yet another modified example of an engine abnormality detection device according to the first embodiment of the present disclosure.

FIG. 8    is a flowchart of an operation of an engine abnormality detection device according to the second embodiment of the present disclosure.

FIG. 9    is a schematic diagram of a configuration of an engine abnormality detection device according to the third embodiment of the present disclosure.

FIG. 10    is a matrix for detecting unevenness of the combustion state for an engine abnormality detection device according to the third embodiment of the present disclosure.

DETAILED DESCRIPTION

Embodiments of the present invention will now be described in detail with reference to the accompanying drawings. However, the scope of the present invention is not limited to the following embodiments. It is intended that dimensions, materials, shapes, relative positions and the like of components described in the embodiments shall be interpreted as illustrative only and not intended to limit the scope of the present invention as it is defined by the claims.

(First embodiment)

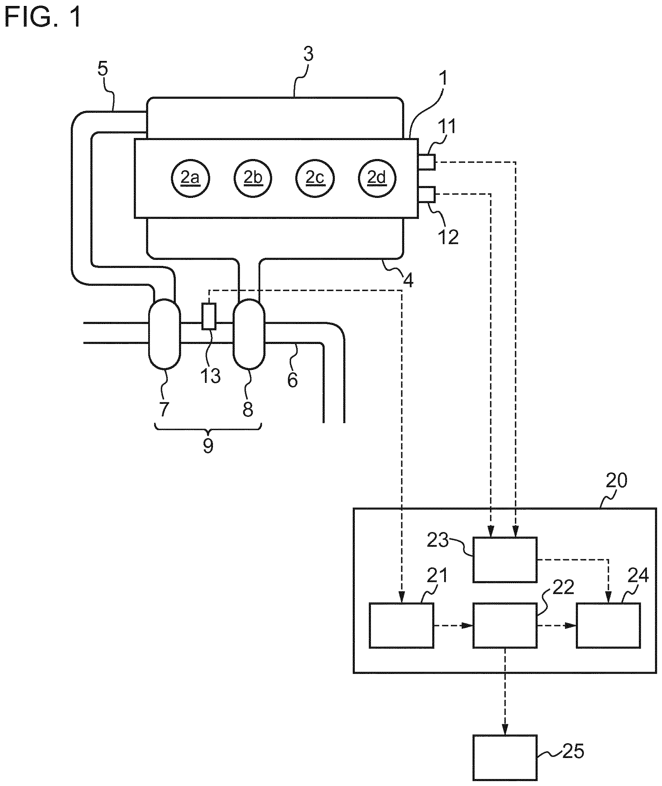

FIG. 1 illustrates an in-line four-cylinder engine 1 including four cylinders 2a to 2d arranged in series. An intake pipe 5 is in communication with each of the cylinders 2a to 2d of the engine 1 via an intake manifold 3, and an exhaust pipe 6 is in communication with each of the cylinders 2a to 2d via an exhaust manifold 4. The engine 1 is provided with a turbocharger 9 for supplying compressed intake air to the respective cylinders 2a to 2d. The turbocharger 9 includes a compressor 7 disposed in the intake pipe 5, and a turbine 8 disposed in the exhaust pipe 6.

The engine 1 includes a TDC sensor 11 and a crank angle sensor 12. The turbocharger 9 is provided with a turbo rotation-speed sensor 13 for detecting the turbo rotation speed, which is the rotation speed of the turbocharger 9. The turbo rotation speed is the rotation information related to the rotation state of the engine 1, and thus the turbo rotation-speed sensor 13 constitutes a rotation information acquisition part for obtaining the rotation information related to the rotation state of the engine 1.

An ECU 20, which serves as a control device, includes a frequency analysis part 21 that performs frequency analysis of the turbo rotation speed, which is rotation information related to the rotation state of the engine 1, and a detection part 22 that detects unevenness of the combustion state of the cylinders 2a to 2d on the basis of the frequency analysis result obtained by the frequency analysis part 21. The turbo rotation-speed sensor 13 is electrically connected to the frequency analysis part 21, and the frequency analysis part 21 and the detection part 22 are connected electrically to each other.

To the detection part 22, a warning part 25 for transmitting a result obtained by the detection part 22 to a driver of a vehicle provided with the engine 1 is connected electrically. The warning part 25 may be a lamp disposed on an instrument panel of the vehicle, a mark or a message that can be shown on the instrument panel, or a speaker that emits a message or a warning sound such as a buzzing sound or music.

Although not an essential configuration in the first embodiment, the ECU 20 may include a combustion cylinder identifying part 23 that identifies a cylinder in which combustion is occurring on the basis of respective detection results of the TDC sensor 11 and the crank angle sensor 12, and an abnormality cylinder identifying part 24 that identifies a cylinder whose combustion state is abnormal on the basis of unevenness of the combustion state detected by the detection part 22 and the cylinder identified by the combustion cylinder identifying part 23. In a case where the ECU 20 includes the combustion cylinder identifying part 23 and the abnormality cylinder identifying part 24, the TDC sensor 11 and the crank angle sensor 12 are each electrically connected to the combustion cylinder identifying part 23, and the detection part 22 and the combustion cylinder identifying part 23 are each electrically connected to the abnormality cylinder identifying part 24.

Next, the operation of the engine 1 will be described.

When the engine 1 is started, air passes through the intake pipe 5, and is sent to the compressor 7. The air sent to the compressor 7 is compressed by a non-depicted compressor wheel. The compressed air is sent to the intake manifold 3 and is sucked into the four cylinders 2a to 2d periodically. In each of the cylinders 2a to 2d, the compressed air is combusted with fuel and becomes exhaust gas. Exhaust gas discharged from each of the cylinders 2a to 2d is collected in the exhaust manifold 4, and is sent to the turbine 8 through the exhaust pipe 6. The exhaust gas sent to the turbine 8 rotates a non-depicted turbine wheel, and then flows through the exhaust pipe 6 to be discharged into the atmosphere.

Generally, the engine 1 is a four-stroke engine. Thus, two rotations of the engine 1 make up a single cycle. Thus, when Ne [rpm] is the rotation speed of the engine 1, the frequency $f_{Ne}$ [Hz] of a single cycle of the engine 1 satisfies the following expression:

[Expression 3]

$$f_{Ne} = \frac{1}{2} \cdot \frac{Ne}{60}$$

Furthermore, when the engine 1 has a plurality of cylinders 2a to 2d, each of the cylinders 2a to 2d combusts once every cycle, and thus, when $n_{cyl}$ is the number of cylinders (in the engine 1, $n_{cyl}$=4), the frequency $f_{cyl}$ [Hz] of pulsation of the engine 1 satisfies the following expression.

[Expression 4]

$$f_{cyl} = \frac{1}{2} \cdot \frac{Ne}{60} \cdot n_{cyl}$$

When there is no unevenness in the combustion state of the cylinders 2a to 2d during operation of the engine 1, pulsation of the engine 1 occurs at the frequency of $f_{cyl}$.

In the first embodiment, during operation of the engine 1, presence or absence of unevenness of the combustion state of the cylinders 2a to 2d is detected. The engine abnormality detection device that detects unevenness of the combustion state of the cylinders 2a to 2d includes the turbo rotation-speed sensor 13 and the ECU 20.

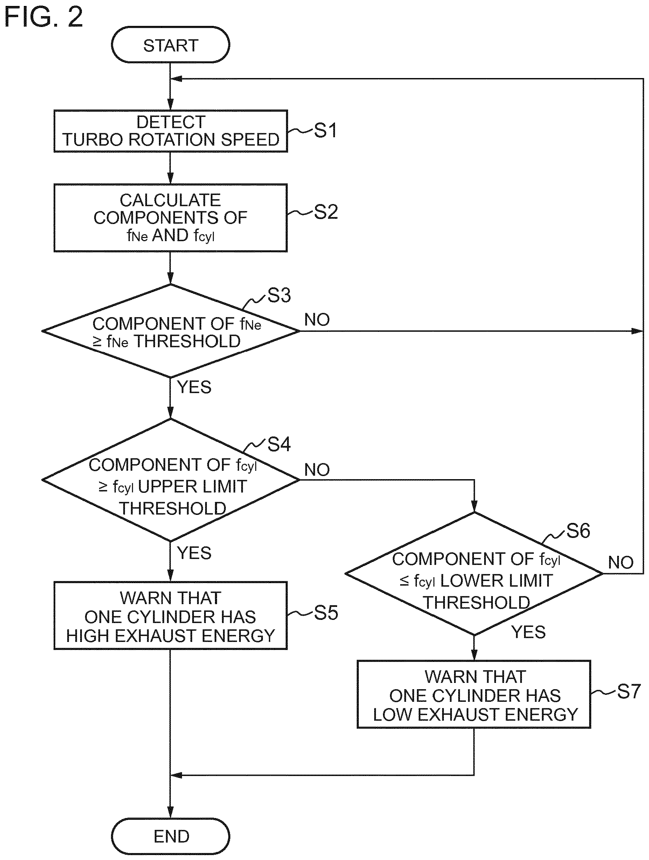

Next, detection of unevenness of the combustion state of the cylinders 2a to 2d during operation of the engine 1 will be described on the basis of the flowchart of FIG. 2.

During operation of the engine 1, the turbo rotation-speed sensor 13 detects the turbo rotation speed (step Si), and sends a signal of the turbo rotation speed to the frequency analysis part 21. Next, the frequency analysis part 21 performs the frequency analysis of the signal of the turbo rotation speed, and calculates the component of $f_{Ne}$ and the component of $f_{cyl}$ (step S2). Furthermore, as the frequency analysis, a known method may be used, such as fast Fourier transform (FFT).

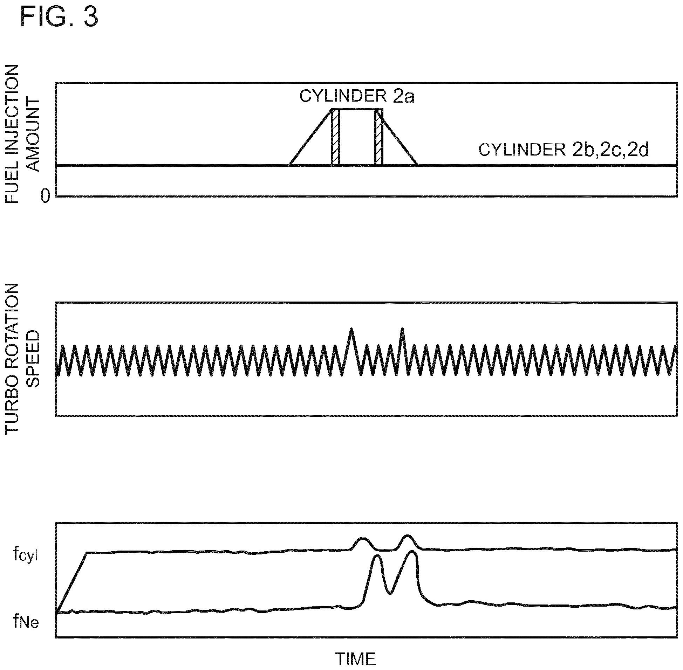

FIG. 3 is a graph showing an example of a relationship between the fuel injection amount to each of the cylinders 2a to 2d, the turbo rotation speed, and the component of $f_{Ne}$ and the component of $f_{cyl}$. That is, the graph shows a case in which, for two cycles of the engine 1, only the fuel injection amount to the cylinder 2a becomes greater than the fuel injection amount to the other cylinders 2b to 2d, and exhaust energy of the cylinder 2a becomes higher than exhaust energy of the cylinders 2b to 2d. If there is no unevenness in exhaust energy of the cylinders 2a to 2d, the component of $f_{cyl}$, which is the frequency of pulsation of the engine 1, becomes greater than the component of $f_{Ne}$. On the other hand, if exhaust energy of the cylinder 2a is higher than exhaust energy of the cylinders 2b to 2d, the amplitude of pulsation of the turbo rotation speed increases, and thus the component of $f_{cyl}$ increases compared to a case where there is no unevenness in exhaust energy of the cylinders 2a to 2d. If only exhaust energy of the cylinder 2a becomes high, energy of exhaust gas discharged from the cylinders 2a to 2d loses balance, and thus the component of $f_{Ne}$ also increases.

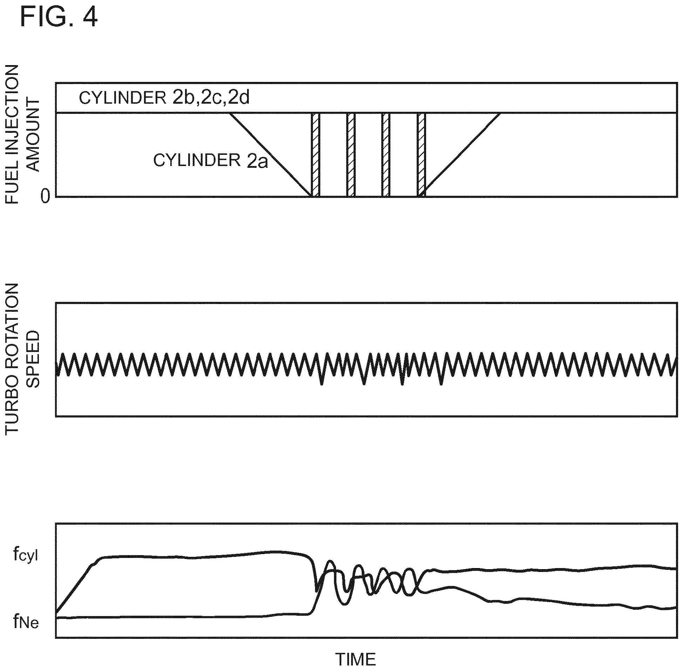

FIG. 4 is a graph showing another example of a relationship between the fuel injection amount to each of the cylinders 2a to 2d, the turbo rotation speed, and the component of $f_{Ne}$ and the component of $f_{cyl}$. That is, the graph shows a case where the cylinder 2a misfires in the course of four cycles of the engine 1. If exhaust energy of the cylinder 2a alone decreases due to misfire, the amplitude of pulsation of the turbo rotation speed decreases, and thus the component of $f_{cyl}$ decreases compared to a case where there is no unevenness in exhaust energy of the cylinders 2a to 2d. Also, if exhaust energy of the cylinder 2a alone decreases, energy of exhaust gas discharged from the cylinders 2a to 2d loses balance, and thus the component of $f_{Ne}$ increases. Although an abnormality is occurring in exhaust gas of the cylinder 2a in FIGs. 3 and 4, the result would be the same also in a case where an abnormality occurs in exhaust energy of one of the other cylinders 2b to 2d.

Thus, for the detection part 22 (see FIG. 1), a $f_{Ne}$ threshold, a $f_{cyl}$ upper limit threshold and a $f_{cyl}$ lower limit threshold are set in advance, where a value greater than the component of $f_{Ne}$ in a case where there is no unevenness in exhaust energy of the cylinders 2a to 2d is a $f_{Ne}$ threshold, which is a threshold of the component of $f_{Ne}$, and a greater value and a smaller value than the component of $f_{cyl}$ in a case where there is no unevenness in exhaust energy of the cylinders 2a to 2d are the $f_{cyl}$ upper limit threshold, which is the upper limit threshold of the component of $f_{cyl}$, and the $f_{cyl}$ lower limit threshold, which is the lower limit threshold of the component of $f_{cyl}$, respectively. Accordingly, if the component of $f_{Ne}$ is not smaller than the $f_{Ne}$ threshold and the component of $f_{cyl}$ is not smaller than the $f_{cyl}$ upper limit threshold, it can be said that exhaust energy of one of the cylinders 2a to 2d is higher than exhaust energy of the other cylinders. Furthermore, if the component of $f_{Ne}$ is not smaller than the $f_{Ne}$ threshold and the component of $f_{cyl}$ is not greater than the $f_{cyl}$ lower limit threshold, it can be said that exhaust energy of one of the cylinders 2a to 2d is lower than exhaust energy of the other cylinders.

Furthermore, from such unevenness of exhaust energy, it is possible to detect unevenness of the combustion state of the cylinders 2a to 2d (unevenness of the fuel injection amount, unevenness of the ignition timing, or deposit adherence or the start of EGR, for instance). The unevenness of the fuel injection amount or the ignition timing can be corrected on the basis of unevenness of exhaust energy.

Returning to the flowchart of FIG. 2, in step S3 subsequent to step S2, the detection part 22 determines whether the component of $f_{Ne}$ is not smaller than the $f_{Ne}$ threshold. If the component of $f_{Ne}$ is smaller than the $f_{Ne}$ threshold, the detection part 22 detects that there is no unevenness in exhaust energy of the cylinders 2a to 2d, and returns to step Si.

In step S3, if the detection part 22 detects that the component of $f_{Ne}$ is not smaller than the $f_{Ne}$ threshold, the detection part 22 determines whether the component of $f_{cyl}$ is not smaller than the $f_{cyl}$ upper limit threshold (step S4). If the component of $f_{cyl}$ is not smaller than the $f_{cyl}$ upper limit threshold, the detection part 22 detects that exhaust energy of one of the cylinders 2a to 2d is higher than exhaust energy of the other cylinders, and issues a warning of the detection result through the warning part 25 (step S5).

On the other hand, in step S4, if the component of $f_{cyl}$ is smaller than the $f_{cyl}$ upper limit threshold, the detection part 22 determines whether the component of $f_{cyl}$ is not greater than the $f_{cyl}$ lower limit threshold (step S6). If the component of $f_{cyl}$ is not greater than the $f_{cyl}$ lower limit threshold, the detection part 22 detects that exhaust energy of one of the cylinders 2a to 2d is lower than exhaust energy of the other cylinders, and issues a warning of the detection result through the warning part 25 (step S7). In step S6, if the component of $f_{cyl}$ is not smaller than the $f_{cyl}$ lower limit threshold, the detection part 22 detects that there is no unevenness in exhaust energy of the cylinders 2a to 2d, and returns to step Si.

In a case where the ECU 20 includes the combustion cylinder identifying part 23 and the abnormality cylinder identifying part 24, the combustion cylinder identifying part 23 can identify which of the cylinders 2a to 2d combusts at which timing, on the basis of the detection results of the TDC sensor 11 and the crank angle sensor 12. By comparing the timing of combustion of each of the cylinders 2a to 2d and the timing when the component of $f_{cyl}$ becomes not smaller than the $f_{cyl}$ upper limit threshold or the timing when the component of $f_{cyl}$ becomes not greater than the $f_{cyl}$ lower limit threshold, the abnormality cylinder identifying part 24 can identify in which one of the cylinders 2a to 2d exhaust energy is higher or lower than other cylinders. In this case, by electrically connecting the warning part 25 to the abnormality cylinder identifying part 24, it is possible to issue a warning to inform which of the cylinders has an abnormality of exhaust energy, through the warning part 25.

As described above, by detecting unevenness of exhaust energy of the cylinders 2a to 2d on the basis of the component of $f_{Ne}$ and the component of $f_{cyl}$ calculated through frequency analysis of the turbo rotation speed, it is possible to detect not only a case where the combustion state of a cylinder deteriorates compared to the combustion state of the other cylinders, but also a case where the injection amount of a cylinder is greater than the injection amount of other cylinders or difference in the ignition timing. Thus, it is possible to detect unevenness of the combustion state of the cylinders 2a to 2d accurately.

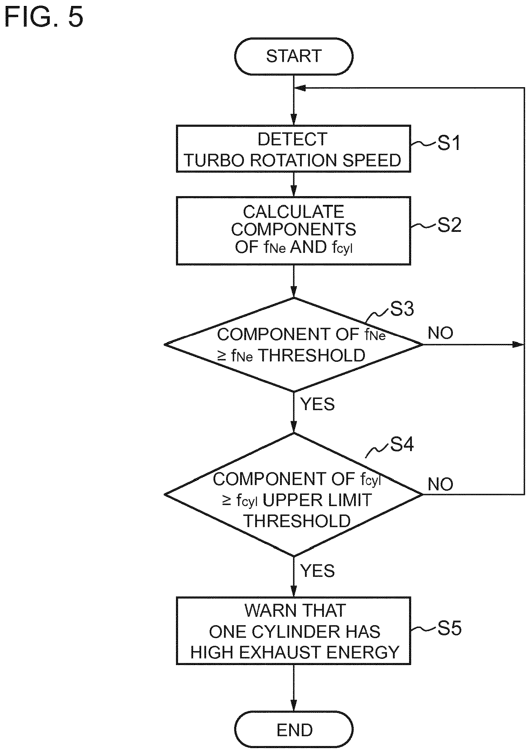

In the first embodiment, both of the $f_{cyl}$ upper limit threshold and the $f_{cyl}$ lower limit threshold are set in advance for the detection part 22, and the magnitude relationship between the component of $f_{cyl}$ and both of the $f_{cyl}$ upper limit threshold and the $f_{cyl}$ lower limit threshold is determined, to detect both of whether exhaust energy of one of the cylinders 2a to 2d is higher and lower than the other cylinders. Nevertheless, the present invention is not limited to this embodiment. Only the $f_{cyl}$ upper limit threshold may be set for the detection part 22, and it may be detected only that exhaust energy of one of the cylinders 2a to 2d is higher than exhaust energy of the other cylinders. In this case, as depicted in FIG. 5, if the component of $f_{cyl}$ is smaller than the $f_{cyl}$ upper limit threshold in step S4, the procedure returns to step Si. The rest of the operation is the same as that in FIG. 2.

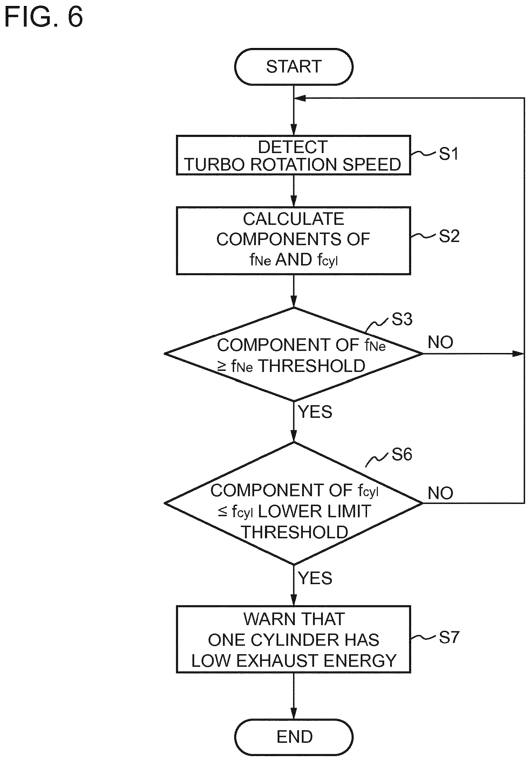

On the other hand, only the $f_{cyl}$ lower limit threshold may be set for the detection part 22, and it may be detected only that exhaust energy of one of the cylinders 2a to 2d is lower than exhaust energy of the other cylinders. In this case, as depicted in FIG. 6, if the component of $f_{Ne}$ is not smaller than the $f_{Ne}$ threshold in step S3, the procedure advances to step S6. The rest of the operation is the same as that in FIG. 2.

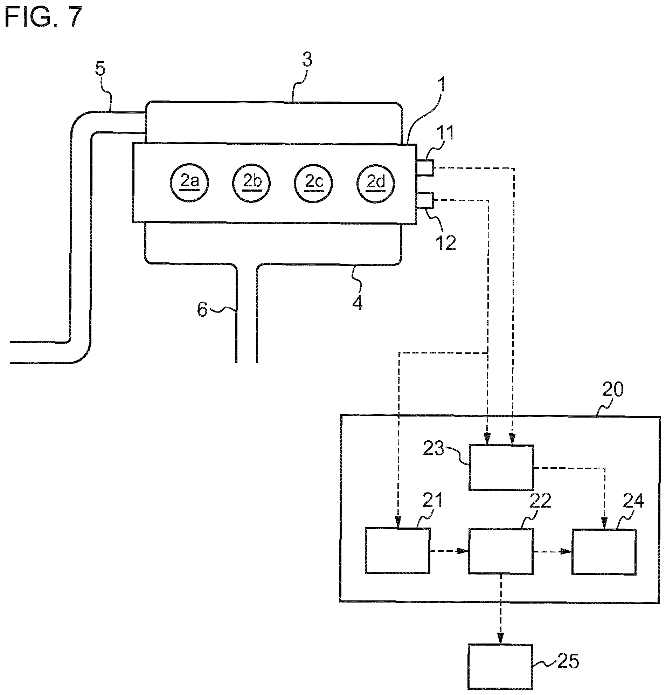

In the first embodiment, the turbo rotation speed is used as rotation speed information related to the rotation state of the engine 1. Nevertheless, the rotation speed of the engine 1 (engine rotation speed) may be used as the rotation speed information. The engine rotation speed is detectable with the crank angle sensor 12. Thus, in this case, the crank angle sensor 12 constitutes the rotation information acquisition part. In this modified example, as depicted in FIG. 7, it is not necessary to provide the turbocharger 9 (see FIG. 1) and the turbo rotation-speed sensor 13 (see FIG. 1) and the crank angle sensor 12 is also connected electrically to the frequency analysis part 21. The rest of the configuration is the same as that in FIG. 1. In this case, the engine abnormality detection device includes the crank angle sensor 12 and the ECU 20. The operation in the modified example is the same as that in FIG. 2, except for detecting the engine rotation speed instead of the turbo rotation speed in step Si of FIG. 2.

However, the engine 1 normally has a great inertia and thus a change of the rotation speed is less likely to appear, and it is often difficult to detect unevenness of the combustion state of the cylinders 2a to 2d accurately. In contrast, in the first embodiment, the turbo rotation speed is used as the rotation information, and thus a change in the rotation speed of the turbocharger 9 is more likely to appear compared to the engine rotation speed. Thus, compared to a case where the engine rotation speed is used as the rotation information, it is possible to detect unevenness of the combustion state of the cylinders 2a to 2d accurately.

(Second Embodiment)

Next, the engine abnormality detection device according to the second embodiment will be described. The engine abnormality detection device according to the second embodiment is different from the first embodiment in that the detection operation by the detection part 22 is modified. In the second embodiment, the same constituent elements as those in the first embodiment are associated with the same reference numerals and not described again in detail.

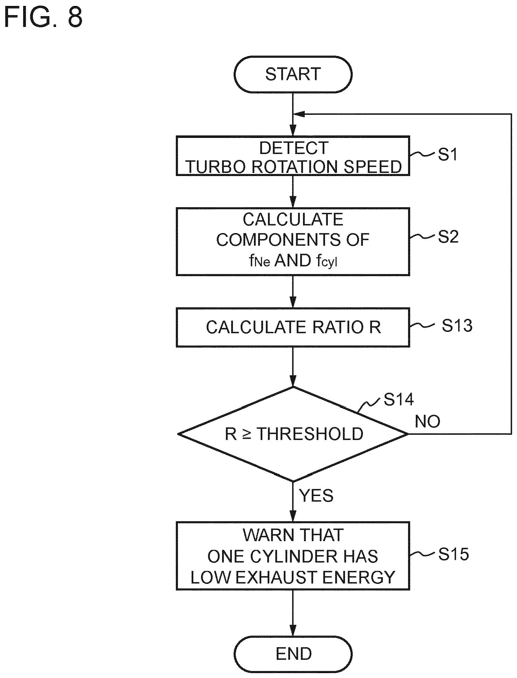

The configuration of the engine abnormality detection device according to the second embodiment is the same as that in FIG.1 if the turbo rotation speed is used as the rotational information related to the rotation state of the engine 1, and the same as that in FIG. 7 if the engine rotation speed is used as the rotation information. Hereinafter, in the configuration of FIG. 1, detection of unevenness of the combustion state of the cylinders 2a to 2d during operation of the engine 1 will be described on the basis of the flow chart of FIG. 8.

The steps S1 and S2 are the same as those in the first embodiment. In step S13 subsequent to step S2, the frequency analysis part 21 calculates a ratio R (= the component of $f_{Ne}$ / the component of $f_{cyl}$) of the component of $f_{Ne}$ to the component of $f_{cyl}$ from the calculated components. The detection part 22 has a threshold of the ratio R set in advance. In step 14 subsequent to step S13, the detection part 22 determines whether the ratio R is not smaller than the threshold. If the ratio R is smaller than the threshold, the detection part 22 detects that there is no unevenness in exhaust energy of the cylinders 2a to 2d, and returns to step Si. If the ratio R is not smaller than the threshold in step S14, the detection part 22 detects that exhaust energy of one of the cylinders 2a to 2d is low, and issues a warning of the detection result through the warning part 25 (step S15).

In the second embodiment, by utilizing the ratio R of the component of $f_{Ne}$ to the component of $f_{cyl}$, if exhaust energy of one cylinder is low, the component of $f_{cyl}$ decreases and the component of $f_{Ne}$ increases. Thus, a change in the ratio R stands out and it is possible to detect a change in exhaust energy accurately.

(Third Embodiment)

Next, the engine abnormality detection device according to the third embodiment will be described. The engine abnormality detection device according to the third embodiment is different from the first embodiment in that the detection operation by the detection part 22 is modified. In the third embodiment, the same constituent elements as those in the first embodiment are associated with the same reference numerals and not described again in detail.

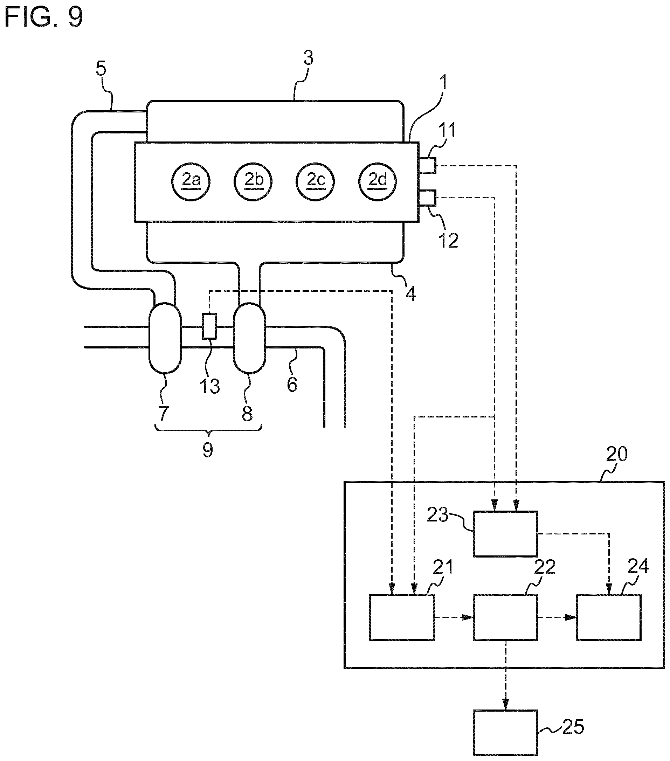

As depicted in FIG. 9, the configuration of the engine abnormality detection device according to the third embodiment is the same as that of the first embodiment, except that the crank angle sensor 12 is also electrically connected to the frequency analysis part 21.

Next, detection of unevenness of the combustion state of each of the cylinders 2a to 2d during operation of the engine 1 will be described.

In the third embodiment, both of the turbo rotation speed and the engine rotation speed are used as rotation speed information related to the rotation state of the engine 1. The frequency analysis part 21 performs frequency analysis of each of the turbo rotation speed and the engine rotation speed, to calculate the component of $f_{Ne\text{-}Turbo}$ and the component of $f_{cyl\text{-}Turbo}$ corresponding to the component of $f_{Ne}$ and the component of $f_{cyl}$ in the first embodiment from the turbo rotation speed, and calculate the component of $f_{Ne\text{-}Eng}$ and the component of $f_{cyl\text{-}Eng}$ corresponding to the component of $f_{Ne}$ and the component of $f_{cyl}$ in the first embodiment from the engine rotation speed.

Then, the operation from step S3 to step S7 of the first embodiment is performed on each of the component of $f_{Ne\text{-}Turbo}$ and the component of $f_{cyl\text{-}Turbo}$, and the component of $f_{Ne\text{-}Eng}$ and the component of $f_{cyl\text{-}Eng}$ (see FIG. 2). For determination in step S3, step S4, and step S6, the detection part 22 includes the following thresholds that are set in advance: the $f_{Ne\text{-}Turbo}$ threshold and the $f_{Ne\text{-}Eng}$ threshold which are thresholds of the component of $f_{Ne\text{-}Turbo}$ and the component of $f_{Ne\text{-}Eng}$, respectively; the $f_{cyl\text{-}Turbo}$ upper limit threshold and the $f_{cyl\text{-}Turbo}$ lower limit threshold, which are an upper limit threshold and a lower limit threshold of the component of $f_{cyl\text{-}Turbo}$; and the $f_{cyl\text{-}Eng}$ upper limit threshold and the $f_{cyl\text{-}Eng}$ lower limit threshold which are an upper limit threshold and a lower limit threshold of the component of $f_{cyl\text{-}Eng}$.

If there is unevenness in the combustion state of the cylinders 2a to 2d, it is determined, through the above operation, that the component of $f_{Ne\text{-}Turbo}$ and the component of $f_{cyl\text{-}Turbo}$ are not smaller than the threshold of $f_{Ne\text{-}Turbo}$ and the threshold of $f_{Ne\text{-}Eng}$, and satisfy one of the following determination result.

(1) The component of $f_{cyl\text{-}Turbo}$ is not smaller than the $f_{cyl\text{-}Turbo}$ upper limit threshold, and the component of $f_{cyl\text{-}Eng}$ is not smaller than the $f_{cyl\text{-}Eng}$ upper limit threshold.

(2) The component of $f_{cyl\text{-}Turbo}$ is not greater than the $f_{cyl\text{-}Turbo}$ lower limit threshold, and the component of $f_{cyl\text{-}Eng}$ is not smaller than the $f_{cyl\text{-}Eng}$ upper limit threshold.

(3) The component of $f_{cyl\text{-}Turbo}$ is not smaller than the $f_{cyl\text{-}Turbo}$ upper limit threshold, and the component of $f_{cyl\text{-}Eng}$ is not greater than the $f_{cyl\text{-}Eng}$ lower limit threshold.

(4) The component of $f_{cyl\text{-}Turbo}$ is not greater than the $f_{cyl\text{-}Turbo}$ lower limit threshold, and the component of $f_{cyl\text{-}Eng}$ is not greater than the $f_{cyl\text{-}Eng}$ lower limit threshold.

threshold.

If the above determination result (1) is satisfied, it is detected that the fuel injection amount to one cylinder is greater than the fuel injection amount to each of the other cylinders. If the above determination result (2) is satisfied, it is detected that the combustion efficiency of one cylinder is greater than the combustion efficiency of each of the other cylinders. If the above determination result (3) is satisfied, it is detected that the combustion efficiency of one cylinder is smaller than the combustion efficiency of each of the other cylinders. If the above determination result (4) is satisfied, it is detected that the fuel injection amount to one cylinder is smaller than the fuel injection amount to each of the other cylinders.

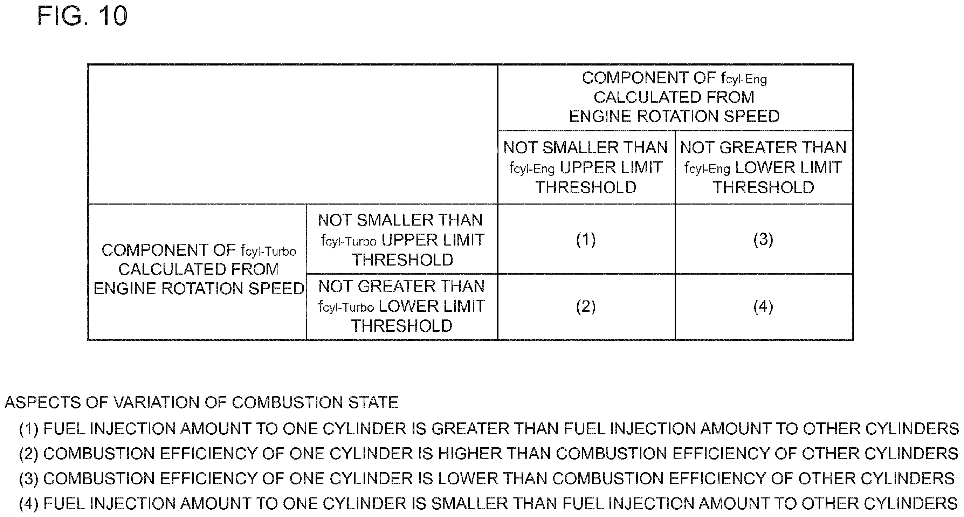

FIG. 10 is a matrix indicating a relationship between the determination results (1) to (4) and the aspects of unevenness of the combustion state corresponding thereto. With the matrix being incorporated into the detection part 22 (FIG. 9) in advance, it is possible to detect the aspects of unevenness of the combustion state on the basis of the determination results (1) to (4), and issue a warning of the detection result through the warning part 25.

As described above, by detecting unevenness of the combustion state of the cylinders on the basis of the component of $f_{Ne\text{-}Eng}$ and the component of $f_{Ne\text{-}Turbo}$ and the component of $f_{cyl\text{-}Eng}$ and the component of $f_{cyl\text{-}Turbo}$ calculated through frequency analysis of each of the engine rotation speed and the turbo rotation speed, it is possible to detect unevenness of the combustion state of the cylinders 2a to 2d in more detail compared to a case in which frequency analysis is performed on only one of the engine rotation speed or the turbo rotation speed.

In the third embodiment, similarly to the first embodiment, with the ECU 20 including the combustion cylinder identifying part 23 and the abnormality cylinder identifying part 24, it is possible to determine in which of the cylinders 2a to 2d the detected unevenness of the combustion state is occurring.

In the third embodiment, for the detection part 22, the $f_{Ne\text{-}Turbo}$ threshold and the $f_{Ne\text{-}Eng}$ threshold, the $f_{cyl\text{-}Turbo}$ upper limit threshold and the $f_{cyl\text{-}Turbo}$ lower limit threshold, the $f_{cyl\text{-}Eng}$ upper limit threshold and the $f_{cyl\text{-}Eng}$ lower limit threshold are set in advance, and it is determined which one of the determination results (1) to (4) is satisfied. Nevertheless, the present invention is not limited to this embodiment. For instance, only necessary thresholds may be set for the detection part 22, and only one, two, or three of the determination results (1) to (3) may be determined. For instance, the $f_{Ne\text{-}Turbo}$ threshold and the $f_{Ne\text{-}Eng}$ threshold, and the $f_{cyl\text{-}Turbo}$ upper limit threshold and the $f_{cyl\text{-}Eng}$ upper limit threshold may be set for the detection part 22 to determine only whether the determination result (1) is satisfied.

While the engine 1 is an in-line four-cylinder engine in the first to third embodiments, the present invention is not limited to these embodiments. The engine 1 may be a V-type engine, or a horizontally-opposed cylinder engine. Further, the engine is not limited to the configuration including four cylinders, and may be of any type as long as the engine includes two or more cylinders.

Description of Reference Numerals

1 Engine
2a Cylinder
2b Cylinder
2c Cylinder
2d Cylinder
3 Intake manifold
4 Exhaust manifold
5 Intake pipe
6 Exhaust pipe
7 Compressor
8 Turbine
9 Turbocharger
11 TDC sensor
12 Crank angle sensor (rotation information acquisition part)
13 Turbo rotation-speed sensor (rotation information acquisition part)
20 ECU
21 Frequency analysis part
22 Detection part
23 Combustion cylinder identifying part
24 Abnormality cylinder identifying part
25 Warning part

**Claims**

1. An engine abnormality detection device for detecting unevenness of a combustion state of each of a plurality of cylinders (2a, 2b, 2c, 2d) of a four-stroke engine (1), the engine abnormality detection device comprising:

    a rotation information acquisition part (12, 13) configured to obtain rotation information related to a rotation state of the engine (1);
    a frequency analysis part (21) configured to perform frequency analysis of the rotation information, the frequency analysis part (21) being configured to calculate a component of $f_{Ne}$ and a component $f_{cyl}$ through the frequency analysis of the rotation information, where $Ne$ [rpm] is a rotation speed of the engine, $f_{Ne}$ [Hz] is a frequency of a single cycle of the engine (1), satisfying the following expression:

$$f_{Ne} = \frac{1}{2} \cdot \frac{Ne}{60}$$

$n_{cyl}$ is the number of the cylinders (2a, 2b, 2c, 2d), and

$f_{cyl}$ [Hz] is a frequency of pulsation of the engine (1), satisfying the following expression:

$$f_{cyl} = \frac{1}{2} \cdot \frac{Ne}{60} \cdot n_{cyl}$$

; and
a detection part (22) configured to detect unevenness of exhaust energy of each cylinder on the basis of the component of $f_{Ne}$ and the component of $f_{cyl}$.

2. The engine abnormality detection device according to claim 1,
wherein, for the detection part (22),
a $f_{Ne}$ threshold being a threshold of the component of $f_{Ne}$, and
an upper limit threshold $f_{cyl}$ being an upper limit threshold of the component $f_{cyl}$, are set in advance, and
wherein the detection part (22) is configured to detect that exhaust energy of one of the plurality of cylinders (2a, 2b, 2c, 2d) is high, if the component of $f_{Ne}$ is not smaller than the $f_{Ne}$ threshold, and the component of $f_{cyl}$ is not smaller than the $f_{cyl}$ upper limit threshold.

3. The engine abnormality detection device according to claim 1 or 2,
wherein, for the detection part (22),
a $f_{Ne}$ threshold being a threshold of the component of $f_{Ne}$, and
a $f_{cyl}$ lower limit threshold being a lower limit threshold of the component $f_{cyl}$, are set in advance, and
wherein the detection part (22) is configured to detect that exhaust energy of one of the plurality of cylinders (2a, 2b, 2c, 2d) is low, if the component of $f_{Ne}$ is not smaller than the $f_{Ne}$ threshold, and the component of $f_{cyl}$ is not greater than the $f_{cyl}$ lower limit threshold.

4. The engine abnormality detection device according to claim 1,
wherein the frequency analysis part (21) is configured to calculate a ratio R of the component of $f_{Ne}$ to the component of $f_{cyl}$ from the calculated component of $f_{Ne}$ and the calculated component of $f_{cyl}$,
wherein, for the detection part (22), a threshold of the ratio R is set in advance, and
wherein the detection part (22) is configured to detect that exhaust energy of one of the plurality of cylinders (2a, 2b, 2c, 2d) is low if the ratio R is not smaller than the threshold.

5. The engine abnormality detection device according to any one of claims 1 to 4,
wherein the rotation information is a rotation speed of a turbocharger (9) for supplying compressed intake air to the cylinders (2a, 2b, 2c, 2d).

6. The engine abnormality detection device according to claim 1,
wherein the rotation information includes:

an engine rotation speed which is a rotation speed of the engine (1); and
a turbo rotation speed which is a rotation speed of a turbocharger (9) for supplying compressed intake air to the cylinders (2a, 2b, 2c, 2d),
wherein the frequency analysis part (21) is configured to calculate a component of $f_{Ne\_Eng}$ corresponding to the component of $f_{Ne}$ and a component of $f_{cyl\_Eng}$ corresponding to the component of $f_{cyl}$ through frequency analysis of the engine rotation speed, and calculate a component of $f_{Ne\_Turbo}$ corresponding to the component of $f_{Ne}$ and a component of $f_{cyl\_Turbo}$ corresponding to the component of $f_{cyl}$ through frequency analysis of the turbo rotation speed, and
wherein the detection part (22) is configured to detect unevenness of a combustion state of each cylinder (2a, 2b, 2c, 2d) on the basis of the component of $f_{Ne\_Eng}$, the component of $f_{cyl\_Eng}$, the component of $f_{Ne\_Turbo}$, and the component of $f_{cyl\_Turbo}$.

7. The engine abnormality detection apparatus according to claim 6,
wherein, for the detection part (22),
a $f_{Ne\_Eng}$ threshold being a threshold of the component of $f_{Ne\_Eng}$,
a $f_{cyl\_Eng}$ upper limit threshold being an upper limit threshold of the component of $f_{cyl\_Eng}$,
a $f_{Ne\_Turbo}$ threshold being a threshold of the component of $f_{Ne\_Turbo}$, and
a $f_{cyl\_Turbo}$ upper limit threshold being an upper limit threshold of the component of $f_{cyl\_Turbo}$,
are set in advance, and
wherein the detection part (22) is configured to detect that a fuel injection amount to one of the plurality of cylinders (2a, 2b, 2c, 2d) is greater than a fuel injection amount to each of the other cylinders, if the component of $f_{Ne\_Eng}$ is not smaller than the $f_{Ne\_Eng}$ threshold and the component of $f_{Ne\_Turbo}$ is not smaller than the $f_{Ne\_Turbo}$ threshold, and the component of $f_{cyl\_Eng}$ is not smaller than the $f_{cyl\_Eng}$ upper limit threshold and the component of $f_{cyl\_Turbo}$ is not smaller than the $f_{cyl\_Turbo}$ upper limit threshold.

8. The engine abnormality detection apparatus according to claim 6 or 7,
wherein, for the detection part (22),
a $f_{Ne\_Eng}$ threshold being a threshold of the component of $f_{Ne\_Eng}$,
a $f_{cyl\_Eng}$ upper limit threshold being an upper limit threshold of the component of $f_{cyl\_Eng}$,
a $f_{Ne\_Turbo}$ threshold being a threshold of the component of $f_{Ne\_Turbo}$, and
a $f_{cyl\_Turbo}$ lower limit threshold being a lower limit threshold of the component of $f_{cyl\_Turbo}$,
are set in advance, and
wherein the detection part (22) is configured to detect that a fuel efficiency of one of the cylinders (2a, 2b, 2c, 2d) is higher than a fuel efficiency of each of the other cylinders, if the component of $f_{Ne\_Eng}$ is not smaller than the $f_{Ne\_Eng}$ threshold and the component of $f_{Ne\_Turbo}$ is not smaller than the $f_{Ne\_Turbo}$ threshold, and the component of $f_{cyl\_Eng}$ is not smaller than the $f_{cyl\_Eng}$ upper limit threshold and the component of $f_{cyl\_Turbo}$ is not greater than the $f_{cyl\_Turbo}$ lower limit threshold.

9. The engine abnormality detection apparatus according to any one of claims 6 to 8,
wherein, for the detection part (22),
a $f_{Ne\_Eng}$ threshold being a threshold of the component of $f_{Ne\_Eng}$,
a $f_{cyl\_Eng}$ lower limit threshold being a lower limit threshold of the component of $f_{cyl\_Eng}$,
a $f_{Ne\_Turbo}$ threshold being a threshold of the component of $f_{Ne\_Turbo}$, and
a $f_{cyl\_Turbo}$ upper limit threshold being an upper limit threshold of the component of $f_{cyl\_Turbo}$,
are set in advance, and
wherein the detection part (22) is configured to detect that a fuel efficiency of one of the cylinders is lower than a fuel efficiency of each of the other cylinders, if the component of $f_{Ne\_Eng}$ is not smaller than the $f_{Ne\_Eng}$ threshold and the component of $f_{Ne\_Turbo}$ is not smaller than the $f_{Ne\_Turbo}$ threshold, and the component of $f_{cyl\_Eng}$ is not greater than the $f_{cyl\_Eng}$ lower limit threshold and the component of $f_{cyl\_Turbo}$ is not smaller than the $f_{cyl\_Turbo}$ upper limit threshold.

10. The engine abnormality detection apparatus according to any one of claims 6 to 9,
wherein, for the detection part (22),
a $f_{Ne\_Eng}$ threshold being a threshold of the component of $f_{Ne\_Eng}$,
a $f_{cyl\_Eng}$ lower limit threshold being a lower limit threshold of the component of $f_{cyl\_Eng}$,
a $f_{Ne\_Turbo}$ threshold being a threshold of the component of $f_{Ne\_Turbo}$, and
a $f_{cyl\_Turbo}$ lower limit threshold being a lower limit threshold of the component of $f_{cyl\_Turbo}$,
are set in advance, and
wherein the detection part (22) is configured to detect that a fuel injection amount to one of the cylinders is smaller than a fuel injection amount to each of the other cylinders, if the component of $f_{Ne\_Eng}$ is not smaller than the $f_{Ne\_Eng}$ threshold and the component of $f_{Ne\_Turbo}$ is not smaller than the $f_{Ne\_Turbo}$ threshold, and the component of $f_{cyl\_Eng}$ is not greater than the $f_{cyl\_Eng}$ lower limit threshold and the component of $f_{cyl\_Turbo}$ is not greater than the $f_{cyl\_Turbo}$ lower limit threshold.

11. The engine abnormality detection device according to any one of claims 2 to 5 and 7 to 10, further comprising:

a combustion cylinder identifying part (23) configured to identify a cylinder (2a, 2b, 2c, 2d) in which combustion is occurring, of the plurality of cylinders (2a, 2b, 2c, 2d); and an abnormality cylinder identifying part (24) configured to identify the one cylinder (2a, 2b, 2c, 2d) on the basis of a result of detection by the detection part (22) and a result of identification by the combustion cylinder identifying part (23).

**Patentansprüche**

1. Motorabnormalitäts-Erkennungsgerät zum Erkennen einer Ungleichmäßigkeit eines Verbrennungszustands von jedem einer Vielzahl von Zylindern (2a, 2b, 2c, 2d) eines Viertaktmotors (1), die Motorabnormalitäts-Erkennungsgerät umfassend:

einen Rotationsinformations-Erfassungsteil (12, 13), der konfiguriert ist, um Rotationsinformationen zu erhalten, die sich auf einen Rotationszustand des Motors (1) beziehen; einen Frequenzanalyseteil (21), der konfiguriert ist, um eine Frequenzanalyse der Rotationsinformation durchzuführen, wobei der Frequenzanalyseteil (21) konfiguriert ist, um eine Komponente von $f_{Ne}$ und eine Komponente $f_{cyl}$ durch die Frequenzanalyse der Rotationsinformation zu berechnen, wobei Ne [U/min] eine Drehzahl des Motors ist, $f_{Ne}$ [Hz] eine Frequenz eines einzelnen Zyklus des Motors (1) ist, die den folgenden Ausdruck erfüllt:

$$f_{Ne} = \frac{1}{2} \cdot \frac{Ne}{60}$$

, $n_{cyl}$ ist die Anzahl der Zylinder (2a, 2b, 2c, 2d), und

$f_{cyl}$ [Hz] ist eine Frequenz der Pulsation des Motors (1), die den folgenden Ausdruck erfüllt:

$$f_{cyl} = \frac{1}{2} \cdot \frac{Ne}{60} \cdot n_{cyl}$$

; und
einen Erkennungsteil (22), der konfiguriert ist, um Ungleichmäßigkeit der Abgasenergie jedes Zylinders auf der Grundlage der Komponente von $f_{Ne}$ und der Komponente von $f_{cyl}$ zu erkennen.

2. Motorabnormalitäts-Erkennungsgerät gemäß Anspruch 1, wobei für den Erkennungsteil (22) ein $f_{Ne}$-Schwellenwert, der ein Schwellenwert der Komponente von $f_{Ne}$ ist, und ein oberer $f_{cyl}$-Grenzschwellenwert, der ein oberer Grenzschwellenwert der Komponente $f_{cyl}$ ist, im Voraus eingestellt werden, und wobei der Erkennungsteil (22) konfiguriert ist, um zu erkennen, dass die Abgasenergie eines der Vielzahl der Zylinder (2a, 2b, 2c, 2d) hoch ist, falls die Komponente von $f_{Ne}$ nicht kleiner als der $f_{Ne}$-Schwellenwert ist und die Komponente von $f_{cyl}$ nicht kleiner als der obere $f_{cyl}$-Grenzschwellenwert ist.

3. Motorabnormalitäts-Erkennungsgerät gemäß Anspruch 1 oder 2, wobei für den Erkennungsteil (22) ein $f_{Ne}$-Schwellenwert, der ein Schwellenwert der Komponente von $f_{Ne}$ ist, und ein unterer $f_{cyl}$-Grenzschwellenwert, der ein unterer Grenzschwellenwert der Komponente $f_{cyl}$ ist, im Voraus eingestellt werden, und wobei der Erkennungsteil (22) konfiguriert ist, um zu erkennen, dass die Abgasenergie eines der Vielzahl der Zylinder (2a, 2b, 2c, 2d) niedrig ist, falls die Komponente von $f_{Ne}$ nicht kleiner als der $f_{Ne}$-Schwellenwert ist und die Komponente von $f_{cyl}$ nicht größer als der untere $f_{cyl}$-Grenzschwellenwert ist.

4. Motorabnormalitäts-Erkennungsgerät gemäß Anspruch 1, wobei der Frequenzanalyseteil (21) konfiguriert ist, um aus der berechneten Komponente von $f_{Ne}$ und der berechneten Komponente von $f_{cyl}$ ein Verhältnis R der Komponente von $f_{Ne}$ zu der Komponente von $f_{cyl}$ zu berechnen, wobei für den Erkennungsteil (22) ein Schwellenwert des Verhältnisses R im Voraus festgelegt wird, und wobei der Erkennungsteil (22) konfiguriert ist, um zu erkennen, dass die Abgasenergie eines der Vielzahl von Zylindern (2a, 2b, 2c, 2d) niedrig ist, falls das Verhältnis R nicht kleiner als der Schwellenwert ist.

5. Motorabnormalitäts-Erkennungsgerät gemäß irgendeinem der Ansprüche 1 bis 4, wobei die Rotationsinformation eine Rotationsgeschwindigkeit eines Turboladers (9) zum Zuführen komprimierter Einlassluft zu den Zylindern (2a, 2b, 2c, 2d) ist.

**6.** Motorabnormalitäts-Erkennungsgerät gemäß Anspruch 1,
wobei die Rotationsinformation beinhaltet:

    eine Motor-Rotationsgeschwindigkeit, welche eine Rotationsgeschwindigkeit des Motors (1) ist; und
    eine Turbo-Rotationsgeschwindigkeit, welche eine Rotationsgeschwindigkeit eines Turboladers (9) zum Zuführen komprimierter Einlassluft zu den Zylindern (2a, 2b, 2c, 2d) ist,
    wobei der Frequenzanalyseteil (21) konfiguriert ist, um eine Komponente von $f_{Ne\_Eng}$ entsprechend der Komponente von $f_{Ne}$ und eine Komponente von $f_{cyl\_Eng}$ entsprechend der Komponente von $f_{cyl}$ durch Frequenzanalyse der Motor-Rotationsgeschwindigkeit zu berechnen, und eine Komponente von $f_{Ne\_Turbo}$ entsprechend der Komponente von $f_{Ne}$ und eine Komponente von $f_{cyl\_Turbo}$ entsprechend der Komponente von $f_{cyl}$ durch Frequenzanalyse der Turbo-Rotationsgeschwindigkeit zu berechnen, und
    wobei der Erkennungsteil (22) konfiguriert ist, um eine Ungleichmäßigkeit eines Verbrennungszustands jedes Zylinders (2a, 2b, 2c, 2d) auf der Grundlage der Komponente von $f_{Ne\_Eng}$, der Komponente von $f_{cyl\_Eng}$, der Komponente von $f_{Ne\_Turbo}$ und der Komponente von $f_{cyl\_Turbo}$ zu erkennen.

**7.** Motorabnormalitäts-Erkennungsvorrichtung gemäß Anspruch 6,
wobei für den Erkennungsteil (22)
ein $f_{Ne\_Eng}$-Schwellenwert, der ein Schwellenwert der Komponente von $f_{Ne\_Eng}$ ist, und
ein oberer $f_{cyl\_Eng}$-Grenzschwellenwert, der ein oberer Grenzschwellenwert der Komponente $f_{cyl\_Eng}$ ist,
ein $f_{Ne\_Turbo}$-Schwellenwert, der ein Schwellenwert der Komponente von $f_{Ne\_Turbo}$ ist, und
ein oberer $f_{cyl\_Turbo}$-Grenzschwellenwert, der ein oberer Grenzschwellenwert der Komponente $f_{cyl\_Turbo}$ ist,
im Voraus eingestellt werden, und
wobei der Erkennungsteil (22) konfiguriert ist, um zu erkennen, dass eine Kraftstoffeinspritzmenge zu einem der Vielzahl von Zylindern (2a, 2b, 2c, 2d) größer ist als eine Kraftstoffeinspritzmenge zu jedem der anderen Zylinder, falls die Komponente von $f_{Ne\_Eng}$ nicht kleiner ist als der $f_{Ne\_Eng}$-Schwellenwert und die Komponente von $f_{Ne\_Turbo}$ nicht kleiner ist als der $f_{we\_Turbo}$-Schwellenwert, und die Komponente von $f_{cyl\_Eng}$ nicht kleiner ist als der obere $f_{cyl\_Eng}$-Grenzschwellenwert und die Komponente von $f_{cyl\_Turbo}$ nicht kleiner ist als der obere $f_{cyl\_Turbo}$-Grenzschwellenwert.

**8.** Motorabnormalitäts-Erkennungsvorrichtung gemäß Anspruch 6 oder 7, wobei für den Erkennungsteil (22)
ein $f_{Ne\_Eng}$-Schwellenwert, der ein Schwellenwert der Komponente von $f_{Ne\_Eng}$ ist, und
ein oberer $f_{cyl\_Eng}$-Grenzschwellenwert, der ein oberer Grenzschwellenwert der Komponente $f_{cyl\_Eng}$ ist,
ein $f_{we\_Turbo}$-Schwellenwert, der ein Schwellenwert der Komponente von $f_{Ne\_Turbo}$ ist, und
ein unterer $f_{cyl\_Turbo}$-Grenzschwellenwert, der ein unterer Grenzschwellenwert der Komponente $f_{cyl\_Turbo}$ ist,
im Voraus eingestellt werden, und
wobei der Erkennungsteil (22) konfiguriert ist, um zu erkennen, dass eine Kraftstoffeffizienz eines der Zylinder (2a, 2b, 2c, 2d) höher ist als eine Kraftstoffeffizienz jedes der anderen Zylinder, falls die Komponente von $f_{Ne\_Eng}$ nicht kleiner ist als der $f_{Ne\_Eng}$-Schwellenwert und die Komponente von $f_{Ne\_Turbo}$ nicht kleiner ist als der $f_{we\_Turbo}$-Schwellenwert, und die Komponente von $f_{cyl\_Eng}$ nicht kleiner ist als der obere $f_{cyl\_Eng}$-Grenzschwellenwert und die Komponente von $f_{cyl\_Turbo}$ nicht größer ist als der untere $f_{cyl\_Turbo}$-Grenzschwellenwert.

**9.** Motorabnormalitäts-Erkennungsvorrichtung gemäß irgendeinem der Ansprüche 6 bis 8,
wobei für den Erkennungsteil (22)
ein $f_{Ne\_Eng}$-Schwellenwert, der ein Schwellenwert der Komponente von $f_{Ne\_Eng}$ ist, und
ein unterer $f_{cyl\_Eng}$-Grenzschwellenwert, der ein unterer Grenzschwellenwert der Komponente $f_{cyl\_Eng}$ ist,
ein $f_{Ne\_Turbo}$-Schwellenwert, der ein Schwellenwert der Komponente von $f_{Ne\_Turbo}$ ist, und
ein oberer $f_{cyl\_Turbo}$-Grenzschwellenwert, der ein oberer Grenzschwellenwert der Komponente $f_{cyl\_Turbo}$ ist,
im Voraus eingestellt werden, und
wobei der Erkennungsteil (22) konfiguriert ist, um zu erkennen, dass eine Kraftstoffeffizienz eines der Zylinder niedriger ist als eine Kraftstoffeffizienz jedes der anderen Zylinder, falls die Komponente von $f_{Ne\_Eng}$ nicht kleiner ist als der $f_{Ne\_Eng}$-Schwellenwert und die Komponente von $f_{Ne\_Turbo}$ nicht kleiner ist als der $f_{Ne\_Turbo}$-Schwellenwert, und die Komponente von $f_{cyl\_Eng}$ nicht größer ist als der untere $f_{cyl\_Eng}$-Grenzschwellenwert und die Komponente von $f_{cyl\_Turbo}$ nicht kleiner ist als der obere $f_{cyl\_Turbo}$-Grenzschwellenwert.

**10.** Motorabnormalitäts-Erkennungsvorrichtung gemäß irgendeinem der Ansprüche 6 bis 9,
wobei für den Erkennungsteil (22)
ein $f_{Ne\_Eng}$-Schwellenwert, der ein Schwellenwert der Komponente von $f_{Ne\_Eng}$ ist, und

ein unterer $f_{cyl\_Eng}$-Grenzschwellenwert, der ein unterer Grenzschwellenwert der Komponente $f_{cyl\_Eng}$ ist,

ein $f_{Ne\_Turbo}$-Schwellenwert, der ein Schwellenwert der Komponente von $f_{Ne\_Turbo}$ ist, und

ein unterer $f_{cyl\_Turbo}$-Grenzschwellenwert, der ein unterer Grenzschwellenwert der Komponente $f_{cyl\_Turbo}$ ist,

im Voraus eingestellt werden, und

wobei der Erkennungsteil (22) konfiguriert ist, um zu erkennen, dass eine Kraftstoffeinspritzmenge zu einem der Zylinder (2a, 2b, 2c, 2d) kleiner ist als eine Kraftstoffeinspritzmenge zu jedem der anderen Zylinder, falls die Komponente von $f_{Ne\_Eng}$ nicht kleiner ist als der $f_{Ne\_Eng}$-Schwellenwert und die Komponente von $f_{Ne\_Turbo}$ nicht kleiner ist als der $f_{Ne\_Turbo}$-Schwellenwert, und die Komponente von $f_{cyl\_Eng}$ nicht größer ist als der untere $f_{cyl\_Eng}$-Grenzschwellenwert und die Komponente von $f_{cyl\_Turbo}$ nicht größer ist als der untere $f_{cyl\_Turbo}$-Grenzschwellenwert.

11. Motorabnormalitäts-Erkennungsgerät gemäß irgendeinem der Ansprüche 2 bis 5, und 7 bis 10, ferner umfassend:

einen Verbrennungszylinder-Identifikationsteil (23), der konfiguriert ist, um einen Zylinder (2a, 2b, 2c, 2d), in dem eine Verbrennung stattfindet, aus der Vielzahl von Zylindern (2a, 2b, 2c, 2d) zu identifizieren; und

einen Abnormalitätszylinder-Identifizierungsteil (24), der konfiguriert ist, um den einen Zylinder (2a, 2b, 2c, 2d) auf der Grundlage eines Ergebnisses der Erkennung durch den Erkennungsteil (22) und eines Ergebnisses der Identifizierung durch den Verbrennungszylinder-Identifizierungsteil (23) zu identifizieren.

## Revendications

1. Un dispositif de détection d'anomalie moteur pour la détection d'une non-uniformité d'un état de combustion de chacun d'une pluralité de cylindres (2a, 2b, 2c, 2d) d'un moteur à quatre temps (1), le dispositif de détection d'anomalie moteur comprenant :

une partie d'acquisition d'information de rotation (12, 13) configurée pour obtenir une information de rotation relative à un état de rotation du moteur (1) ;

une partie d'analyse de fréquence (21) configurée pour effectuer une analyse de fréquence de l'information de rotation, la partie d'analyse de fréquence (21) étant configurée pour calculer une composante de $f_{Ne}$ et une composante $f_{cyl}$

par l'intermédiaire de l'analyse de fréquence de l'information de rotation,

Ne [t/min] étant une vitesse de rotation du moteur, $f_{Ne}$ [Hz] étant une fréquence d'un cycle isolé du moteur (1) vérifiant l'expression suivante :

$$f_{Ne} = \frac{1}{2} \cdot \frac{Ne}{60}$$, $n_{cyl}$ étant le nombre de cylindres (2a, 2b, 2c, 2d), et $f_{cyl}$ [Hz] étant une fréquence de la pulsation du moteur (1) vérifiant l'expression suivante :

$$f_{cyl} = \frac{1}{2} \cdot \frac{Ne}{60} \cdot n_{cyl} \; ; \text{et}$$

une partie de détection (22) configurée pour détecter une non-uniformité de l'énergie d'échappement de chaque cylindre sur la base de la composante de $f_{Ne}$ et de la composante de $f_{cyl}$.

2. Le dispositif de détection d'anomalie moteur selon la revendication 1, dans lequel, pour la partie de détection (22), un seuil de $f_{Ne}$ qui est un seuil de la composante de $f_{Ne}$, et un seuil de limite supérieure de $f_{cyl}$ qui est un seuil de limite supérieure de la composante $f_{cyl}$, sont paramétrés à l'avance, et dans lequel la partie de détection (22) est configurée pour détecter que l'énergie d'échappement de l'un de la pluralité de cylindres (2a, 2b, 2c, 2d) est élevée, si la composante de $f_{Ne}$ n'est pas inférieure au seuil $f_{Ne}$ et la composante de $f_{cyl}$ n'est pas inférieure au seuil de limite supérieure de $f_{cyl}$.

3. Le dispositif de détection d'anomalie moteur selon la revendication 1 ou 2, dans lequel, pour la partie de détection (22), un seuil de $f_{Ne}$ qui est un seuil de la composante de $f_{Ne}$, et un seuil de limite inférieure de $f_{cyl}$ qui est un seuil de limite inférieure de la composante $f_{cyl}$, sont paramétrés à l'avance, et dans lequel la partie de détection (22) est configurée pour détecter que l'énergie d'échappement de l'un de la pluralité de cylindres (2a, 2b, 2c, 2d) est faible, si la composante de $f_{Ne}$ n'est pas inférieure au seuil de $f_{Ne}$ et la composante de $f_{cyl}$ n'est pas supérieure au seuil de limite inférieure de $f_{cyl}$.

4. Le dispositif de détection d'anomalie moteur selon la revendication 1, dans lequel la partie d'analyse de fréquence (21) est configurée pour calculer un ratio R de la composante de $f_{Ne}$ sur la composante de $f_{cyl}$ à partir de la composante calculée de $f_{Ne}$ et de la composante calculée de $f_{cyl}$, dans lequel, pour la partie de détection (22), un seuil du ratio R est paramétré à l'avance, et dans lequel la partie de détection (22) est configurée pour détecter que l'énergie d'échappement de l'un de la pluralité de cylindres (2a, 2b, 2c, 2d) est faible si le ratio R n'est pas inférieur au seuil.

5. Le dispositif de détection d'anomalie moteur selon l'une des revendications 1 à 4, dans lequel l'information de rotation est une vitesse de rotation d'un turbocompresseur (9) destiné à délivrer de l'air d'admission comprimé aux cylindres (2a, 2b, 2c, 2d).

6. Le dispositif de détection d'anomalie moteur selon la revendication 1,
dans lequel l'information de rotation comprend :

une vitesse de rotation moteur qui est une vitesse de rotation du moteur (1) ; et
une vitesse de rotation turbo qui est une vitesse de rotation d'un turbocompresseur (9) destiné à délivrer de l'air d'admission comprimé aux cylindres (2a, 2b, 2c, 2d),

dans lequel la partie d'analyse de fréquence (21) est configurée pour calculer une composante de $f_{Ne\_Eng}$ correspondant à la composante de $f_{Ne}$ et une composante de $f_{cyl\_Eng}$ correspondant à la composante de $f_{cyl}$ par l'intermédiaire d'une analyse de fréquence de la vitesse de rotation moteur, et pour calculer une composante de $f_{Ne\_Turbo}$ correspondant à la composante de $f_{Ne}$ et une composante de $f_{cyl\_Turbo}$ correspondant à la composante de $f_{cyl}$ par l'intermédiaire d'une analyse de fréquence de la vitesse de rotation turbo, et
dans lequel la partie de détection (22) est configurée pour détecter une non-uniformité d'un état de combustion de chaque cylindre (2a, 2b, 2c, 2d) sur la base de la composante de $f_{Ne\_Eng}$, de la composante de $f_{cyl\_Eng}$, de la composante de $f_{Ne\_Turbo}$ et de la composante de $f_{cyl\_Turbo}$.

7. Le dispositif de détection d'anomalie moteur selon la revendication 6,
dans lequel, pour la partie de détection (22),
un seuil de $f_{Ne\_Eng}$ qui est un seuil de la composante de $f_{Ne\_Eng}$,
un seuil de limite supérieure de $f_{cyl\_Eng}$ qui est un seuil de limite supérieure de la composante de $f_{cyl\_Eng}$,
un seuil de $f_{Ne\_Turbo}$ qui est un seuil de la composante de $f_{Ne\_Turbo}$, et
un seuil de limite supérieure de $f_{cyl\_Turbo}$ qui est un seuil de limite supérieure de la composante de $f_{cyl\_Turbo}$,
sont paramétrés à l'avance, et
dans lequel la partie de détection (22) est configurée pour détecter qu'une quantité d'injection de carburant dans l'un de la pluralité des cylindres (2a, 2b, 2c, 2d) est supérieure à une quantité d'injection de carburant dans chacun des autres cylindres, si la composante de $f_{Ne\_Eng}$ n'est pas inférieure au seuil de $f_{Ne\_Eng}$ et la composante de $f_{Ne\_Turbo}$ n'est pas inférieure au seuil de $f_{Ne\_Turbo}$, et la composante de $f_{cyl\_Eng}$ n'est pas inférieure au seuil de limite supérieure de $f_{cyl\_Eng}$ et la composante de $f_{cyl\_Turbo}$ n'est pas inférieure au seuil de limite supérieure de $f_{cyl\_Turbo}$.

8. L'appareil de détection d'anomalie moteur selon la revendication 6 ou 7,
dans lequel, pour la partie de détection (22),
un seuil de $f_{Ne\_Eng}$ qui est un seuil de la composante de $f_{Ne\_Eng}$,
un seuil de limite supérieure de FCE qui est un seuil de limite supérieure de la composante $f_{cyl\_Eng}$,
un seuil de $f_{Ne\_Turbo}$ qui est un seuil de la composante de $f_{Ne\_Turbo}$, et
un seuil de limite inférieure de $f_{cyl\_Turbo}$ qui est un seuil de limite inférieure de la composante de $f_{cyl\_Turbo}$,
sont paramétrés à l'avance, et
dans lequel la partie de détection (22) est configurée pour détecter qu'un rendement de carburant de l'un des cylindres (2a, 2b, 2c, 2d) est supérieur à un rendement de carburant de chacun des autres cylindres, si la composante de $f_{Ne\_Eng}$ n'est pas inférieure au seuil de $f_{Ne\_Eng}$ et la composante de $f_{Ne\_Turbo}$ n'est pas inférieure au seuil de $f_{Ne\_Turbo}$, et la composante de $f_{cyl\_Eng}$ n'est pas inférieure au seuil de limite supérieure de $f_{cyl\_Eng}$ et la composante de $f_{cyl\_Turbo}$ n'est pas supérieure au seuil de limite inférieure de $f_{cyl\_Turbo}$.

9. L'appareil de détection d'anomalie moteur selon l'une des revendications 6 à 8, dans lequel, pour la partie de détection (22),
un seuil de $f_{Ne\_Eng}$ qui est un seuil de la composante de $f_{Ne\_Eng}$,
un seuil de limite inférieure de $f_{cyl\_Eng}$ qui est un seuil de limite inférieure de la composante de $f_{cyl\_Eng}$,
un seuil de $f_{Ne\_Turbo}$ qui est un seuil de la composante de $f_{Ne\_Turbo}$, et
un seuil de limite supérieure de $f_{cyl\_Turbo}$ qui est un seuil de limite supérieure de la composante de $f_{cyl\_Turbo}$,
sont paramétrés à l'avance, et
dans lequel la partie de détection (22) est configurée pour détecter qu'un rendement de carburant de l'un des cylindres est inférieur à un rendement de carburant de chacun des autres cylindres, si la composante de $f_{Ne\_Eng}$ n'est pas inférieure au seuil de $f_{Ne\_Eng}$ et la composante de $f_{Ne\_Turbo}$ n'est pas inférieure au seuil de $f_{Ne\_Turbo}$, et la composante de $f_{cyl\_Eng}$ n'est pas supérieure au seuil de limite inférieure de $f_{cyl\_Eng}$ et la composante de $f_{cyl\_Turbo}$ n'est pas inférieure au seuil de limite supérieure de $f_{cyl\_Turbo}$.

10. L'appareil de détection d'anomalie moteur selon l'une des revendications 6 à 9, dans lequel, pour la partie de détection (22),

un seuil de $f_{Ne\_Eng}$ qui est un seuil de la composante de $f_{Ne\_Eng}$,

un seuil de limite inférieure de $f_{cyl\_Eng}$ qui est un seuil de limite inférieure de la composante de $f_{cyl\_Eng}$,

un seuil de $f_{Ne\_Turbo}$ qui est un seuil de la composante de $f_{Ne\_Turbo}$, et

un seuil de limite inférieure de $f_{cyl\_Turbo}$ qui est un seuil de limite inférieure de la composante $f_{cyl\_Turbo}$,

sont paramétrés à l'avance, et

dans lequel la partie de détection (22) est configurée pour détecter qu'une quantité d'injection de carburant dans l'un des cylindres est inférieure à une quantité d'injection de carburant dans chacun des autres cylindres, si la composante de $f_{Ne\_Eng}$ n'est pas inférieure au seuil de $f_{Ne\_Eng}$ et la composante de $f_{Ne\_Turbo}$ n'est pas inférieure au seuil de $f_{Ne\_Turbo}$, et la composante de $f_{cyl\_Eng}$ n'est pas supérieure au seuil de limite inférieure de $f_{cyl\_Eng}$ et la composante de $f_{cyl\_Turbo}$ n'est pas supérieure au seuil de limite inférieure de $f_{cyl\_Turbo}$.

11. Le dispositif de détection d'anomalie moteur selon l'une des revendications 2 à 5 et 7 à 10, comprenant en outre :

une partie d'identification de cylindre en combustion (23) configurée pour identifier un cylindre (2a, 2b, 2c, 2d) dans laquelle a lieu la combustion parmi la pluralité de cylindres (2a, 2b, 2c, 2d) ; et

une partie d'identification de cylindre en anomalie (24) configurée pour identifier ledit cylindre (2a, 2b, 2c, 2d) sur la base d'un résultat de la détection par la partie de détection (22) et d'un résultat de l'identification par la partie d'identification de cylindre en combustion (23).

FIG. 1

FIG. 2

```
                    ┌──────────┐
                    │  START   │
                    └──────────┘
                          │
                          ▼
            ┌──────────────────────────┐
            │         DETECT           │  ~S1
            │  TURBO ROTATION SPEED    │
            └──────────────────────────┘
                          │
                          ▼
            ┌──────────────────────────┐
            │       CALCULATE          │  ~S2
            │     COMPONENTS OF        │
            │     fNe AND fcyl         │
            └──────────────────────────┘
                          │
                          ▼
                   ◇ S3                         NO
          COMPONENT OF fNe  ──────────────────────────┐
          ≥ fNe THRESHOLD                              │
                   │ YES                               │
                   ▼                                   │
                   ◇ S4                         NO     │
          COMPONENT OF fcyl ───────────┐              │
          ≥ fcyl UPPER LIMIT            │              │
          THRESHOLD                     │              │
                   │ YES                ▼              │
                   ▼                   ◇ S6      NO    │
          ┌─────────────────┐  COMPONENT OF fcyl ──────┤
          │   WARN THAT     │  ≤ fcyl LOWER LIMIT       │
          │ ONE CYLINDER HAS│  THRESHOLD               │
          │ HIGH EXHAUST    │  ~S5         │ YES        │
          │ ENERGY          │             ▼            │
          └─────────────────┘  ┌─────────────────┐     │
                   │           │   WARN THAT     │ ~S7 │
                   │           │ ONE CYLINDER HAS│     │
                   │           │ LOW EXHAUST     │     │
                   │           │ ENERGY          │     │
                   │           └─────────────────┘     │
                   │◄───────────────────┘              │
                   ▼                                   │
            ┌──────────┐                               │
            │   END    │                               │
            └──────────┘                               │
```

18

FIG. 3

FIG. 4

## FIG. 5

START

DETECT TURBO ROTATION SPEED — S1

CALCULATE COMPONENTS OF $f_{Ne}$ AND $f_{cyl}$ — S2

COMPONENT OF $f_{Ne}$ ≥ $f_{Ne}$ THRESHOLD — S3 — NO

YES

COMPONENT OF $f_{cyl}$ ≥ $f_{cyl}$ UPPER LIMIT THRESHOLD — S4 — NO

YES

WARN THAT ONE CYLINDER HAS HIGH EXHAUST ENERGY — S5

END

FIG. 6

```
                    ┌─────────────┐
                    │    START    │
                    └─────────────┘
                           │
                           ▼
              ┌──────────────────────────┐
              │         DETECT           │ ～S1
              │  TURBO ROTATION SPEED    │
              └──────────────────────────┘
                           │
                           ▼
              ┌──────────────────────────┐
              │       CALCULATE          │
              │     COMPONENTS OF        │ ～S2
              │     fNe AND fcyl         │
              └──────────────────────────┘
                           │
                           ▼
                     ╱──────────╲  ～S3
                    ╱ COMPONENT  ╲      NO
                   ╱  OF fNe      ╲─────────────┐
                   ╲ ≥ fNe THRESHOLD╱           │
                    ╲──────────────╱            │
                           │                    │
                          YES                   │
                           ▼                    │
                     ╱──────────╲  ～S6          │
                    ╱ COMPONENT  ╲      NO       │
                   ╱  OF fcyl     ╲──────────────┤
                   ╲ ≤ fcyl LOWER  ╱             │
                    ╲ LIMIT        ╱             │
                     ╲ THRESHOLD  ╱              │
                      ╲─────────╱                │
                           │                     │
                          YES                    │
                           ▼                     │
              ┌──────────────────────────┐       │
              │       WARN THAT          │       │
              │   ONE CYLINDER HAS       │ ～S7   │
              │  LOW EXHAUST ENERGY      │       │
              └──────────────────────────┘       │
                           │                     │
                           ▼                     │
                    ┌─────────────┐              │
                    │     END     │              │
                    └─────────────┘              │
```

FIG. 7

FIG. 8

```
                    ┌─────────────┐
                    │    START    │
                    └──────┬──────┘
                           │  ◄──────────────────┐
                           ▼                      │
              ┌──────────────────────┐            │
              │       DETECT         │            │
              │ TURBO ROTATION SPEED │ ～S1        │
              └──────────┬───────────┘            │
                         ▼                        │
              ┌──────────────────────┐            │
              │     CALCULATE        │            │
              │   COMPONENTS OF      │ ～S2        │
              │   fNe AND fcyl       │            │
              └──────────┬───────────┘            │
                         ▼                        │
              ┌──────────────────────┐            │
              │   CALCULATE RATIO R  │ ～S13       │
              └──────────┬───────────┘            │
                         ▼                        │
                        ╱ ╲   ～S14                │
                      ╱     ╲           NO         │
                    ╱  R ≥    ╲─────────────────────┘
                    ╲ THRESHOLD╱
                      ╲     ╱
                        ╲ ╱
                         │ YES
                         ▼
              ┌──────────────────────┐
              │      WARN THAT       │
              │  ONE CYLINDER HAS    │ ～S15
              │ LOW EXHAUST ENERGY   │
              └──────────┬───────────┘
                         ▼
                    ┌─────────────┐
                    │     END     │
                    └─────────────┘
```

FIG. 9

# FIG. 10

| | | COMPONENT OF $f_{cyl\text{-}Eng}$ CALCULATED FROM ENGINE ROTATION SPEED | |
| --- | --- | --- | --- |
| | | NOT SMALLER THAN $f_{cyl\text{-}Eng}$ UPPER LIMIT THRESHOLD | NOT GREATER THAN $f_{cyl\text{-}Eng}$ LOWER LIMIT THRESHOLD |
| COMPONENT OF $f_{cyl\text{-}Turbo}$ CALCULATED FROM ENGINE ROTATION SPEED | NOT SMALLER THAN $f_{cyl\text{-}Turbo}$ UPPER LIMIT THRESHOLD | (1) | (3) |
| | NOT GREATER THAN $f_{cyl\text{-}Turbo}$ LOWER LIMIT THRESHOLD | (2) | (4) |

ASPECTS OF VARIATION OF COMBUSTION STATE

(1) FUEL INJECTION AMOUNT TO ONE CYLINDER IS GREATER THAN FUEL INJECTION AMOUNT TO OTHER CYLINDERS

(2) COMBUSTION EFFICIENCY OF ONE CYLINDER IS HIGHER THAN COMBUSTION EFFICIENCY OF OTHER CYLINDERS

(3) COMBUSTION EFFICIENCY OF ONE CYLINDER IS LOWER THAN COMBUSTION EFFICIENCY OF OTHER CYLINDERS

(4) FUEL INJECTION AMOUNT TO ONE CYLINDER IS SMALLER THAN FUEL INJECTION AMOUNT TO OTHER CYLINDERS

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018096894 A1
- WO 2017154105 A1
- JP H3246353 A
- JP 2976684 B
- JP 2001289111 A
- JP 2014234814 A
- JP 2016142181 A
- JP 2015197074 A
- JP 2017106417 A